# EUROPEAN PATENT APPLICATION

(11) **EP 4 749 102 A1**
(43) Date of publication of application: **27.05.2026**
(21) Application number: 24842825.2
(22) Date of filing: 27.05.2024
(51) Int. Cl.: F01N 5/02, F01N 13/08

(54) **EXHAUST HEAT RECOVERY DEVICE**

(30) Priority: 19.07.2023 JP 2023117582
(71) Applicant: Marelli Corporation, Saitama-city, Saitama 331-0812 (JP)
(72) Inventor: CHIBA, Naoharu, Saitama-City, Saitama 331-0812 (JP); NAKAJIMA, Shirou, Saitama-City, Saitama 331-0812 (JP); HISANAGA, Tooru, Saitama-City, Saitama 331-0812 (JP)
(74) Representative: Grünecker Patent- und Rechtsanwälte PartG mbB
(86) International application number: PCT/JP2024/019350
(87) International publication number: WO 2025/018029

(57) **Abstract**

An exhaust heat recovery device (1) includes: a first flow path member (10) having a first flow path through which an exhaust gas flows; a second flow path member (20) adjacent to the first flow path member (10) including a heat exchanger (30), and having a second flow path; and a valve mechanism (40) configured to open and close the first flow path and to block or inhibit a flow of the exhaust gas from the second flow path, and the first flow path member (10) includes a double wall portion (19) including an inner wall portion (17) facing the first flow path and an outer wall portion (18) located on a side opposite from the first flow path, on at least a part of a upstream side in a flow direction of the exhaust gas with respect to the valve mechanism (40).

## Description

### TECHNICAL FIELD

The present invention relates to an exhaust heat recovery device.

### BACKGROUND ART

JP 2021-188567 A discloses an exhaust heat recovery device including a first flow path member having a first flow path through which an exhaust gas flows, a second flow path member provided adjacent to the first flow path and having a second flow path bypassing the first flow path, and a heat exchanger that performs heat exchange between the exhaust gas and a refrigerant.

The exhaust heat recovery device described in JP 2021-188567 A includes a valve mechanism including a butterfly valve that opens and closes the first flow path by a rotation shaft orthogonal to a flow direction of the exhaust gas in the first flow path, and a shutter portion that closes an outflow port of the second flow path which is a bypass path when the butterfly valve opens the first flow path, and opens the outflow port when the butterfly valve closes the first flow path, the valve mechanism switching a flow path of the exhaust gas between the first flow path and the second flow path.

### SUMMARY OF INVENTION

In the exhaust heat recovery device disclosed in JP 2021-188567 A, for example, in a case in which the exhaust gas bypasses the first flow path to the second flow path and the heat exchange is performed in the heat exchanger, when the first flow path is closed by the butterfly valve, the exhaust gas stays in a closed space formed by the butterfly valve and the first flow path member and flows into the second flow path.

However, when the exhaust gas stays, heat of the exhaust gas is conducted to the first flow path member and is released from the first flow path member to an outside, which causes a heat loss. Therefore, a temperature of the exhaust gas flowing through the heat exchanger may decrease, and heat recovery efficiency may decrease.

An object of the present invention is to prevent a decrease in temperature of an exhaust gas flowing through a heat exchanger and to prevent a decrease in heat recovery efficiency.

According to an aspect of the present invention, there is provided an exhaust heat recovery device that recovers heat of an exhaust gas exhausted from an engine by heat exchange with a fluid, the device including: a first flow path member in which a first flow path through which an exhaust gas flows is formed; a second flow path member which is provided adjacent to the first flow path member, in which a second flow path bypassing a part of the first flow path is formed, and which includes a heat exchanger that performs heat exchange between the exhaust gas flowing in the second flow path and the fluid; and a valve mechanism which is provided in the first flow path, in which the valve mechanism opens the first flow path, or closes the first flow path to guide the exhaust gas to the second flow path, and the first flow path member includes, on at least a part on an upstream side in a flow direction of the exhaust gas with respect to the valve mechanism, a double wall portion including an inner wall portion facing the first flow path and an outer wall portion located on a side of the inner wall portion opposite from the first flow path.

According to the present invention, it is possible to prevent a decrease in temperature of an exhaust gas flowing through a heat exchanger and to prevent a decrease in heat recovery efficiency.

### BRIEF DESCRIPTION OF DRAWINGS

[FIG. 1] FIG. 1 is a perspective view illustrating an exhaust heat recovery device according to an embodiment of the present invention.
[FIG. 2] FIG. 2 is a partially cutaway front view of the exhaust heat recovery device according to the present embodiment.
[FIG. 3] FIG. 3 is a side view illustrating a heat recovery state of the exhaust heat recovery device according to the present embodiment as viewed from an upstream side of a first flow path.
[FIG. 4] FIG. 4 is a perspective view illustrating a valve mechanism of the exhaust heat recovery device according to the present embodiment.
[FIG. 5] FIG. 5 is a partially cutaway front view of the exhaust heat recovery device according to the present embodiment.
[FIG. 6] FIG. 6 is a side view illustrating a non-heat recovery state of the exhaust heat recovery device according to the present embodiment as viewed from the upstream side of the first flow path.

### DESCRIPTION OF EMBODIMENTS

Hereinafter, an exhaust heat recovery device 1 according to an embodiment of the present invention will be described with reference to the drawings.

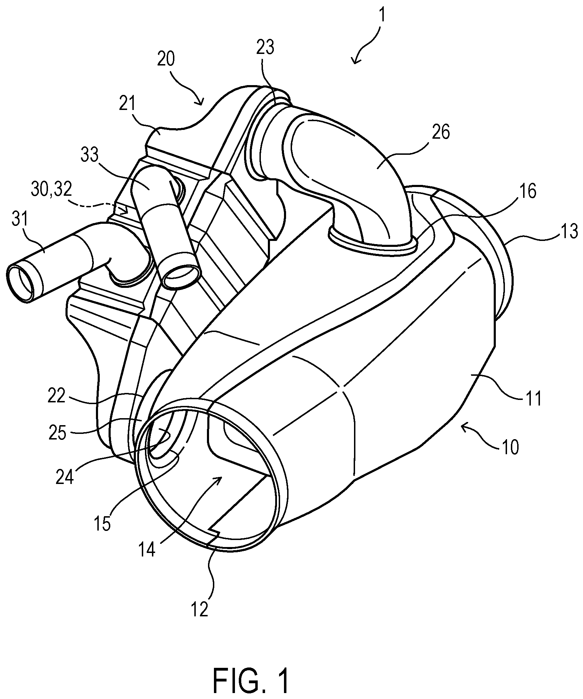

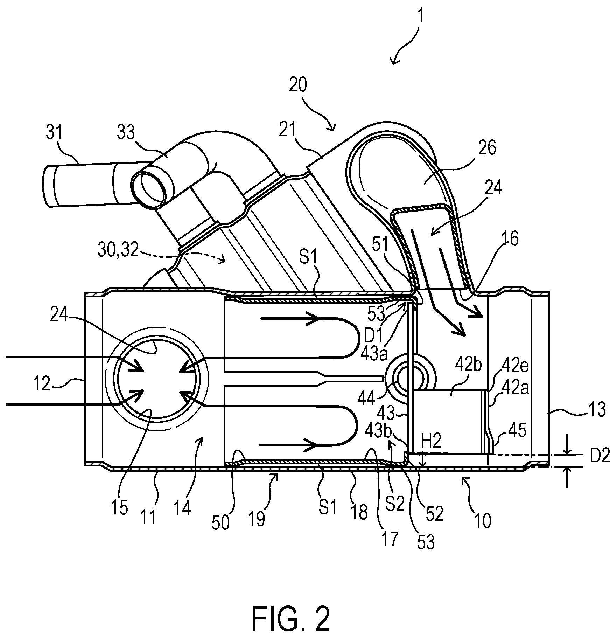

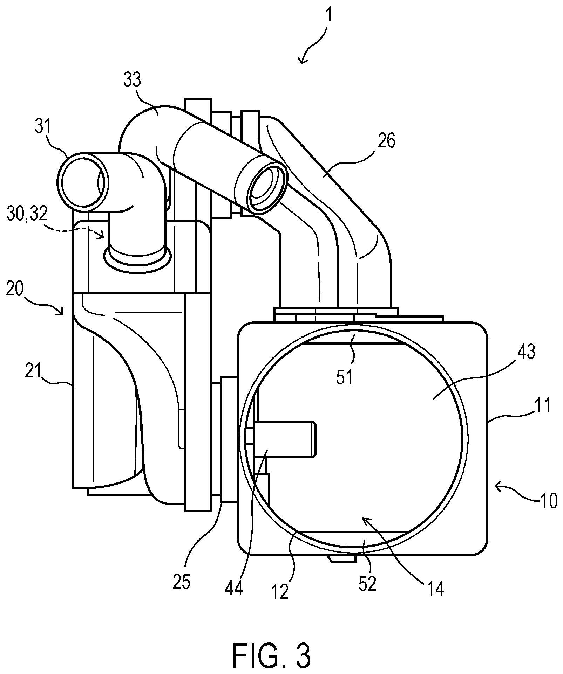

FIG. 1 is a perspective view illustrating the exhaust heat recovery device 1 according to the embodiment of the present invention. FIG. 2 is a partially cutaway front view of the exhaust heat recovery device 1. Further, FIG. 3 is a side view of a heat recovery state of the exhaust heat recovery device 1 shown in FIG. 2 as viewed from an upstream side of a first flow path 14.

As illustrated in FIG. 1, the exhaust heat recovery device 1 includes a first flow path member 10, a second flow path member 20, and a heat exchanger 30.

The first flow path member 10 includes a main body portion 11, a first inflow portion 12, and a first outflow portion 13. The main body portion 11 has a hollow structure, and the first flow path 14 through which an exhaust gas flows is formed inside the main body portion 11.

The first inflow portion 12 is an opening on one side of the main body portion 11 and is connected to a flow path of the exhaust gas from an engine. The first outflow portion 13 is an opening on the other side of the main body portion 11 and is connected to a flow path of the exhaust gas. In an exhaust gas flow, the first inflow portion 12 is located upstream of the first outflow portion 13.

In the main body portion 11, a first upstream side opening portion 15 as an outflow port through which the exhaust gas flows out from the first flow path 14 to the second flow path 24 (see FIG. 2) and a first downstream side opening portion 16 as an inflow port through which the exhaust gas flows into the first flow path 14 from the second flow path 24 are formed.

The first flow path member 10 includes a double wall portion 19 located upstream of the butterfly valve 41 (FIG. 2) that opens and closes the first flow path 14 in a flow direction of the exhaust gas. The double wall portion 19 includes an inner wall portion 17 facing the first flow path 14 and an outer wall portion 18 located on a side of the inner wall portion 17 opposite from the first flow path 14.

In the present embodiment, the exhaust heat recovery device 1 includes an inner member 50 that covers at least a part of an inner surface of the first flow path member 10 inside the first flow path member 10.

In the present embodiment, the inner member 50 constitutes the inner wall portion 17, and the first flow path member 10 constitutes the outer wall portion 18. That is, the first flow path member 10 and the inner member 50 constitute the double wall portion 19.

The double wall portion 19 has a gap portion S1 separated from the first flow path 14 between the inner wall portion 17 and the outer wall portion 18.

The inner member 50 includes a joint portion 53 with the first flow path member 10 at a part on the upstream side or a downstream side in the flow direction of the exhaust gas. In the present embodiment, the first flow path member 10 and the inner member 50 are connected by spot welding at the joint portion 53 on the downstream side in the flow direction of the exhaust gas.

In the present embodiment, the inner member 50 includes a first rising portion 51 rising toward an inside of the first flow path 14. The first rising portion 51 is located upstream of the first downstream side opening portion 16 in the first flow path 14, and is formed over the first downstream side opening portion 16 in a direction orthogonal to the flow direction of the exhaust gas.

The inner member 50 includes a second rising portion 52 rising toward the inside of the first flow path 14 on an inner surface facing the first rising portion 51. The second rising portion 52 is formed upstream of the butterfly valve 41 (valve body 43) when the valve mechanism 40 is in the heat recovery state, and is formed in the direction orthogonal to the flow direction of the exhaust gas.

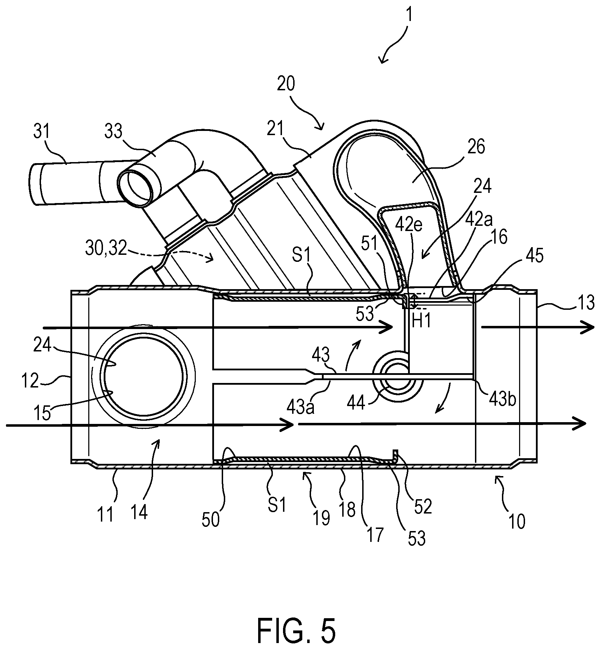

In a non-heat recovery state (FIG. 5) of the valve mechanism 40, the first rising portion 51 is formed such that a height H1 thereof from the inner surface of the first flow path member 10 is larger than a gap D1 formed in a direction of separation between the first downstream side opening portion 16 and the valve mechanism 40 (shutter portion 42). Further, in the heat recovery state (FIG. 2), the second rising portion 52 is formed such that a height H2 thereof from the inner surface of the first flow path member 10 is larger than a gap D2 in a direction of separation between the inner surface of the first flow path member 10 and the valve mechanism 40 (valve body 43).

The second flow path member 20 is provided adjacent to the first flow path member 10. The second flow path member 20 includes a main body portion 21, a second upstream side opening portion 22, and a second downstream side opening portion 23.

The main body portion 21 has a hollow structure, and the second flow path 24 through which the exhaust gas bypassing a part of the first flow path 14 flows is formed inside the main body portion 21.

The second upstream side opening portion 22 is located on the upstream side in the second flow path 24, and takes the exhaust gas bypassing from a part of the first flow path 14 into the main body portion 21. The second downstream side opening portion 23 allows the exhaust gas flowing in the main body portion 21 to flow to the first flow path 14.

The second upstream side opening portion 22 is connected to the first upstream side opening portion 15 formed in the first flow path member 10 by a first communication portion 25. Further, the second downstream side opening portion 23 is connected to the first downstream side opening portion 16 formed in the first flow path member 10 by a second communication portion 26.

An inside of the first communication portion 25, an inside of the second flow path member 20, and an inside of the second communication portion 26 constitute the second flow path 24.

By the first flow path member 10 and the second flow path member 20 described above, the exhaust gas can be bypassed from the first flow path 14 to the second flow path member 20 through the first communication portion 25. Further, the exhaust gas flowing through the second flow path member 20 can flow to the first flow path 14 through the second communication portion 26.

The second flow path member 20 includes the heat exchanger 30. The heat exchanger 30 includes a refrigerant inflow portion 31, a heat exchanger body portion 32, and a refrigerant outflow portion 33, and causes coolant water to flow as a refrigerant. The heat exchanger 30 exchanges heat between the exhaust gas flowing through the second flow path 24 and the refrigerant.

The refrigerant inflow portion 31 is a hollow tubular portion that connects a flow path (not shown) through which the coolant water before cooling the engine flows and an inside of the heat exchanger body portion 32. The refrigerant inflow portion 31 allows the coolant water as the refrigerant supplied from the flow path to flow into the heat exchanger body portion 32.

The refrigerant outflow portion 33 is a hollow tubular portion that connects the inside of the heat exchanger body portion 32 and a flow path (not shown) for supplying the coolant water to the engine. The refrigerant inflow portion 31 causes the coolant water flowing in the heat exchanger body portion 32 to flow into the flow path.

When the exhaust gas flows through a portion of the main body portion 21 of the second flow path member 20, which is surrounded by the heat exchanger body portion 32 (portion of the second flow path 24, which is surrounded by the heat exchanger body portion 32), the heat exchanger 30 can perform heat exchange between the exhaust gas and the coolant water flowing in the heat exchanger body portion 32 to move heat of the exhaust gas to the coolant water and recover the heat. A state in which a valve mechanism 40 to be described later closes the first flow path 14 and the exhaust gas flows through the second flow path 24 to perform the heat exchange is referred to as the heat recovery state. On the other hand, a state in which the valve mechanism 40 opens the first flow path 14 and the exhaust gas does not flow through the second flow path 24 is referred to as the non-heat recovery state.

As shown in FIG. 2, the exhaust heat recovery device 1 includes the valve mechanism 40 inside the first flow path member 10.

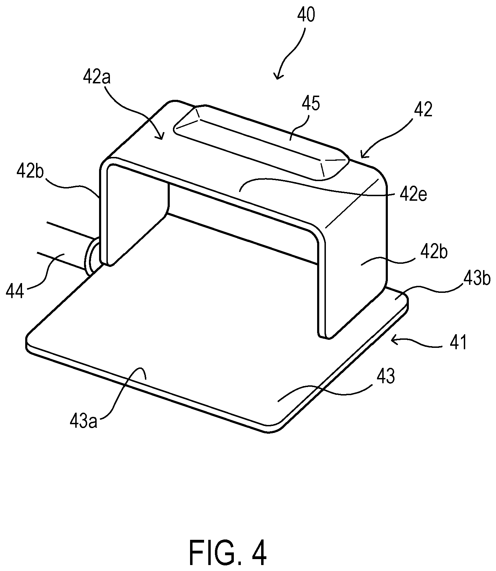

FIG. 4 is a perspective view illustrating the valve mechanism 40 of the exhaust heat recovery device 1 shown in FIG. 1.

The valve mechanism 40 includes the butterfly valve 41 that opens and closes the first flow path 14, the shutter portion 42 that blocks or inhibits the exhaust gas flowing from the second flow path 24 into the first flow path 14, and the valve body 43 that opens and closes the first flow path 14.

The valve mechanism 40 is provided at a part of a downstream side of the inner member 50 in the flow direction of the exhaust gas. That is, the valve mechanism 40 is provided downstream of the double wall portion 19.

A rotation shaft portion 44 is connected to the valve body 43, and is rotatably supported in the first flow path 14. The rotation shaft portion 44 is connected to a drive shaft of an actuator as a drive portion (not shown).

The valve body 43 in the butterfly valve 41 is a plate-shaped member formed to have a length and a width capable of closing the first flow path 14. The valve body 43 can switch between the opening and the closing of the first flow path 14 by rotation of the rotation shaft portion 44.

The shutter portion 42 is provided on the valve body 43. The shutter portion 42 includes a shutter body portion 42a and a pair of connection portions 42b. The shutter body portion 42a opens or closes the first downstream side opening portion 16.

Each of the connection portions 42b supports the shutter body portion 42a while maintaining a distance from the valve body 43 such that the shutter body portion 42a is not in contact with an inner wall portion (first downstream side opening portion 16) of the first flow path member 10 and can close the first downstream side opening portion 16.

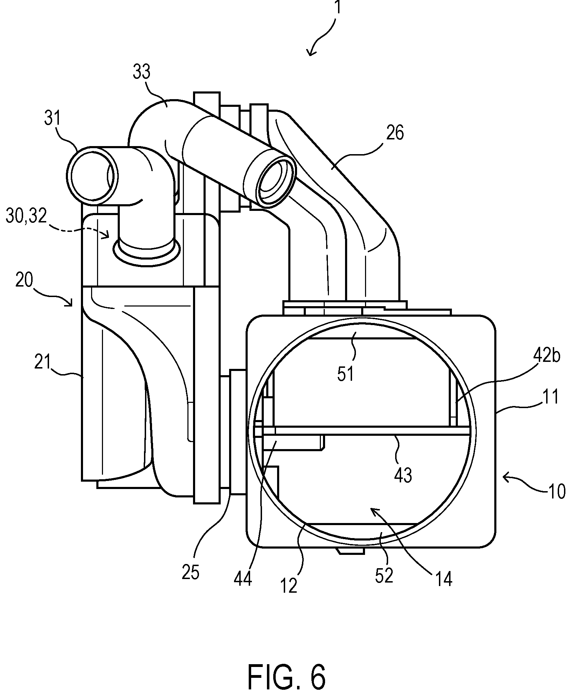

The shutter portion 42 includes a convex portion 45 protruding outward in a radial direction of rotation of the rotating valve mechanism 40. In the non-heat recovery state of the valve mechanism 40 (FIGS. 5 and 6), the convex portion 45 abuts on the inner surface of the first flow path member 10 on the downstream side of the first downstream side opening portion 16 in the flow direction of the exhaust gas.

In the non-heat recovery state of the valve body 43, an end portion 43a of the valve body 43 on the upstream side in the flow direction of the exhaust gas is formed to abut on or approach the first rising portion 51 in the heat recovery state of the valve mechanism 40, that is, in a state in which the valve body 43 closes the first flow path 14.

In the non-heat recovery state of the valve body 43, an end portion 43b of the valve body 43 on the upstream side in the flow direction of the exhaust gas is formed to abut on or approach the second rising portion 52 in the heat recovery state of the valve mechanism 40, that is, in a state in which the valve body 43 closes the first flow path 14.

In the present embodiment, the first rising portion 51 is formed to be larger than the gap D1 formed in the direction of separation between the first downstream side opening portion 16 and the shutter portion 42 in the non-heat recovery state (FIG. 5) of the valve mechanism 40. Further, in the heat recovery state (FIG. 2) of the valve mechanism 40, the second rising portion 52 is formed to be larger than the gap D2 in the direction of separation between the inner surface of the first flow path member 10 and the valve.

### <Operation of Valve Mechanism and Flow of Exhaust gas>

Next, an operation of the valve mechanism 40 and the flow of the exhaust gas in the exhaust heat recovery device 1 according to the present embodiment will be described.

FIG. 5 is a partially cutaway front view of the exhaust heat recovery device 1. Further, FIG. 6 is a side view of the non-heat recovery state of the exhaust heat recovery device 1 shown in FIG. 5 as viewed from the upstream side of the first flow path 14.

The valve mechanism 40 in the exhaust heat recovery device 1 can switch between the heat recovery state (FIGS. 2 and 3) in which the first downstream side opening portion 16 is opened by the shutter portion 42 and the first flow path 14 is closed by the butterfly valve 41, and the non-heat recovery state (FIGS. 5 and 6) in which the first downstream side opening portion 16 is closed by the shutter portion 42 and the first flow path 14 is opened by the butterfly valve 41.

In the present embodiment, as shown in FIGS. 5 and 6, in the non-heat recovery state, the valve mechanism 40 rotates such that a main surface of the valve body 43 of the valve mechanism 40 is parallel to the flow direction of the exhaust gas, a tip of an end portion 42e of the shutter portion 42 abuts on a surface of the first rising portion 51 on the downstream side in the flow direction of the exhaust gas, and the convex portion 45 formed on the shutter portion 42 abuts on the inner surface of the first flow path member 10 on the downstream side of the first downstream side opening portion 16 in the flow direction of the exhaust gas.

In this state, the exhaust gas flows into the first flow path member 10 from the first inflow portion 12, flows through the first flow path 14 formed inside the first flow path member 10, and flows out from the first outflow portion 13.

On the other hand, as the end portion 43a of the valve body 43 located on the upstream side in the flow direction in the non-heat recovery state rotates in a direction approaching the first rising portion 51 and the end portion 43b of the valve body 43 located on the downstream side in the flow direction rotates in a direction approaching the second rising portion 52, the valve mechanism 40 rotates such that a main surface of the valve body 43 of the valve mechanism 40 is orthogonal to the flow direction of the exhaust gas, and enters the heat recovery state.

As shown in FIGS. 2 and 3, when the valve mechanism 40 is in the heat recovery state, a surface of the first rising portion 51 on the upstream side in the flow direction abuts on a surface of the end portion 43a of the valve body 43 on the downstream side in the flow direction. Further, a surface of the second rising portion 52 on the downstream side in the flow direction abuts on a surface of the end portion 43b of the valve body 43 on the upstream side in the flow direction.

In this state, when the exhaust gas flows into the first flow path member 10 from the first inflow portion 12, the exhaust gas stays in a space S2 formed by the valve body 43 and the first flow path member 10, and flows into the second flow path 24 from the first upstream side opening portion 15.

The exhaust gas flows through the second flow path 24 inside the second flow path member 20 and exchanges the heat with the refrigerant flowing through the heat exchanger 30. After the exhaust gas flows through the second flow path 24, the exhaust gas returns from the first downstream side opening portion 16 to the first flow path 14, flows through the first flow path, and flows out from the first outflow portion 13.

### <Functions and Effects>

The exhaust heat recovery device 1 according to the present embodiment includes the first flow path member 10 in which the first flow path 14 through which the exhaust gas flows is formed, the second flow path member 20 which is provided adjacent to the first flow path member 10, in which the second flow path 24 bypassing a part of the first flow path 14 is formed, and which includes the heat exchanger 30 that performs the heat exchange between the exhaust gas flowing through the second flow path 24 and the refrigerant, and the valve mechanism 40 which is disposed in the first flow path member 10 and which includes the butterfly valve 41 that opens and closes the first flow path 14 and the shutter portion 42 that blocks or inhibits the flow of the exhaust gas from the second flow path 24.

In the first flow path member 10, the first upstream side opening portion 15 as the outflow port of the exhaust gas from the first flow path 14 to the second flow path 24 and the first downstream side opening portion 16 as the inflow port of the exhaust gas from the second flow path 24 to the first flow path 14 are formed.

The valve mechanism 40 is formed to be switched between the heat recovery state and the non-heat recovery state by the rotation of the rotation shaft portion 44 orthogonal to the flow direction of the exhaust gas in the first flow path 14. As described above, in the non-heat recovery state, the shutter portion 42 closes the first downstream side opening portion 16, and the butterfly valve 41 opens the first flow path 14. In the heat recovery state, the shutter portion 42 opens the first downstream side opening portion 16, and the butterfly valve 41 closes the first flow path 14.

In the present embodiment, the first flow path member 10 includes the double wall portion 19 including the inner wall portion 17 facing the first flow path 14 and the outer wall portion 18 located on the side of the inner wall portion 17 opposite from the first flow path 14, on the upstream side in the flow direction of the exhaust gas with respect to the butterfly valve 41 that opens and closes the first flow path 14.

The double wall portion 19 has the gap portion S1 formed between the inner wall portion 17 and the outer wall portion 18 and separated from the first flow path 14.

When the heat exchange is performed in the exhaust gas heat exchanger 30, the exhaust gas stays in the closed space S2 of the first flow path member 10 formed by the butterfly valve 41, and flows into the second flow path 24 from the first upstream side opening portion 15 (see an arrow in FIG. 2).

In such a case, in the double wall portion 19, since the heat of the exhaust gas flowing through the first flow path 14 is conducted from the inner wall portion 17 to an outside via the outer wall portion 18, it is possible to reduce a heat loss caused by heat dissipation from the outer wall portion 18 to the outside of the first flow path member 10 in the double wall portion 19.

Therefore, according to the exhaust heat recovery device 1, it is possible to prevent a decrease in temperature of the exhaust gas flowing through the heat exchanger 30 and to prevent a decrease in heat recovery efficiency.

In the present embodiment, since the double wall portion 19 has the gap portion S1, the conduction of the heat of the exhaust gas flowing through the first flow path 14 formed inside the inner wall portion 17 can be blocked by the gap portion S1.

Therefore, it is possible to improve the effect of reducing the heat loss caused by the heat dissipation from the first flow path member 10 constituting the outer wall portion 18 to the outside of the first flow path member 10.

In the present embodiment, the inner member 50 is provided inside the first flow path member 10 and covers the inner surface of the first flow path member 10, the inner member 50 constitutes the inner wall portion 17, and the first flow path member 10 constitutes the outer wall portion 18.

In this way, by forming the inner wall portion 17 by the inner member 50, it is possible to easily produce the double wall portion 19.

In the present embodiment, in the inner member 50, the first flow path member 10 and the inner member 50 are connected by the spot welding at the joint portion 53 on the downstream side in the flow direction of the exhaust gas.

As described above, in the present embodiment, the inner member 50 is joined to the first flow path member 10 on one of the upstream side or the downstream side in the flow direction of the exhaust gas, and has a free end on the other of the upstream side or the downstream side which is not joined with respect to thermal expansion and contraction of the inner wall portion 17.

In particular, the outer wall portion 18 of the first flow path member 10 is connected to the second flow path member 20 at two positions. More specifically, the first communication portion 25 of the second flow path member 20 is connected to the first upstream side opening portion 15 of the first flow path member 10, and the second communication portion 26 of the second flow path member 20 is connected to the first downstream side opening portion 16 of the first flow path member 10. In the non-heat recovery state, since the exhaust gas having a high temperature flows in the first flow path 14, the first flow path member 10 tends to expand due to the heat of the exhaust gas. However, in the first flow path member 10, since a position of a portion between two connection points with the second flow path member 20 as described above is regulated by the second flow path member 20, a thermal stress is generated.

On the other hand, in the exhaust heat recovery device 1, the double wall portion 19 is disposed between the first upstream side opening portion 15 and the first downstream side opening portion 16 (that is, the double wall portion 19 is disposed between the two connection points), the inner wall portion 17 (inner member 50) that receives the heat of the exhaust gas is locally welded, and at least one of end portions thereof is a free end, thereby allowing thermal expansion of the inner wall portion 17. Accordingly, heat resistance of the exhaust heat recovery device 1 can be improved.

### [Other Embodiments]

Although the embodiment of the invention has been described above, the above embodiment is merely a part of application examples of the present invention, and are not intended to limit the technical scope of the present invention to the specific configurations of the above embodiment.

In the first embodiment, a fluid that cools an exhaust gas may be a fluid other than coolant water, and a medium such as a liquid or a gas suitable for heat exchange can be applied.

In the present embodiment, the valve mechanism 40 has a structure in which the pair of connection portions 42b support both ends of the shutter body portion 42a. On the other hand, for example, one connection portion 42b may be provided in a central portion of the shutter body portion 42a. Further, a louver in which a plurality of connection portions 42b are arranged in parallel may be used.

The inner member 50 provided inside the first flow path member 10 may be divided along a horizontal plane including an axis of the rotation shaft portion 44 of the valve mechanism 40. Further, the inner member 50 may be divided along a plane perpendicular to the axis of the rotation shaft portion 44 of the valve mechanism 40.

The present application claims priority under Japanese Patent Application No. 2023-117582 filed to the Japan Patent Office on July 19, 2023, and the entire content of this application is incorporated herein by reference.

## Claims

1. An exhaust heat recovery device that recovers heat of an exhaust gas exhausted from an engine by heat exchange with a fluid, the device comprising:
a first flow path member in which a first flow path through which an exhaust gas flows is formed;
a second flow path member which is provided adjacent to the first flow path member, in which a second flow path bypassing a part of the first flow path is formed, and which includes a heat exchanger that performs heat exchange between the exhaust gas flowing in the second flow path and the fluid; and
a valve mechanism which is provided in the first flow path, wherein
the valve mechanism opens the first flow path, or closes the first flow path to guide the exhaust gas to the second flow path, and
the first flow path member includes, on at least a part on an upstream side in a flow direction of the exhaust gas with respect to the valve mechanism, a double wall portion including an inner wall portion facing the first flow path and an outer wall portion located on a side of the inner wall portion opposite from the first flow path.

2. The exhaust heat recovery device according to claim 1, wherein
the double wall portion has a gap portion formed between the inner wall portion and the outer wall portion and separated from the first flow path.

3. The exhaust heat recovery device according to claim 1, further comprising:
an inner member that covers at least a part of an inner surface of the first flow path member inside the first flow path member, wherein
the inner member constitutes the inner wall portion, and the first flow path member constitutes the outer wall portion.

4. The exhaust heat recovery device according to claim 3, wherein
the first flow path member is connected to the second flow path member at two positions,
the double wall portion is provided in the first flow path member between two connection points with the second flow path member, and
the inner member includes a joint portion with the first flow path member on one of the upstream side or a downstream side in the flow direction of the exhaust gas, and has a free end on the other of the upstream side or the downstream side without the joint portion.
